# EUROPEAN PATENT SPECIFICATION

(11) **EP 1 464 089 B1**
(45) Date of publication and mention of the grant of the patent: **02.05.2012**
(21) Application number: 03708816.8
(22) Date of filing: 08.01.2003
(51) Int. Cl.: H01M 10/0525, C03C 8/24, C03C 27/04, H01M 2/06, H01M 2/08

(54) **HERMETIC SEALS FOR LITHIUM-ION BATTERIES**
HERMETISCHE VERSIEGELUNGEN FÜR LITHIUMIONENBATTERIEN
JOINTS HERMETIQUES POUR BATTERIES AUX IONS LITHIUM

(30) Priority: 09.01.2002 US 347218 P; 08.01.2003 US 338369
(43) Date of publication of application: 06.10.2004
(73) Proprietor: Alfred E. Mann Foundation for Scientific Research, Santa Clarita, CA 91380-9005 (US)
(72) Inventor: LASATER, Brian, J., East Wenatchee, WA 98802 (US)
(74) Representative: Paget, Hugh Charles Edward
(86) International application number: PCT/US2003/000454
(87) International publication number: WO 2003/061034

(56) References cited:
- US-A- 5 104 755
- US-A- 5 306 581
- US-A- 6 037 539
- US-A- 6 090 503

## Description

### FIELD OF THE INVENTION

The present invention is generally directed to forming glass-to-metal seals that are of particular use when hermeticity is required for very long exposures to harsh environments. These seals can be used for the glass-to-metal seals in components exposed to severe chemical environments, e.g., in headers for ambient temperature lithium-ion batteries comprised of aluminum.

### BACKGROUND OF THE INVENTION

The present invention is generally directed to hermetic seals and in particular to hermetic seals that can be used with a lithium-ion battery. A hermetic aluminum seal in lithium-ion batteries is desired. Aluminum is a preferred material in the manufacturing of lithium-ion batteries due to compatibility with the lithium-ion electrolyte. Currently known seals are formed by clamping an aluminum bushing around a polymeric washer, such as PTFE or Teflon^{®}. Teflon is a registered trademark of E. I. du Pont de Nemours and Company. This seal is not truly hermetic and is subject to leaking, especially when under pressure generated during battery operation. What is lacking, therefore, is the ability to form a hermetic aluminum seal that is compatible with battery electrochemistry.

Hermetic seals are often used for harsh environmental applications. They are used to present a barrier that protects sensitive electronic hardware components from outside environmental conditions, which would otherwise destroy the hardware components. In the case of medical devices, hermetic seals can also protect living tissue from electronic components. Hermetic seals must be manufactured as ruggedly as possible for applications where hermeticity will be required for extended exposures to harsh environments.

Ambient temperature lithium-ion batteries provide high energy densities and high rate capabilities at low temperatures; however, a major problem associated with these cells is the highly corrosive nature of lithium battery chemistry. Standard glass electrical insulators, used to separate the header of a battery from the center pin while providing a hermetic seal for the battery, experience extensive corrosion over relatively short periods of time, thus severely limiting the shelf life of the cells.

In order to form an acceptable glass-to-metal seal in an ambient temperature lithium battery, the glass must meet three main criteria. First, it must have a high resistance to lithium corrosion; second, it must be able to make a hermetic seal between the metal header and the metal center pin, which requires a thermal expansion match between the glass and the pin; and, third, it must be an electrical insulator so that the header and the center pin are electrically isolated.

Also, where feedthroughs are utilized in connection with body implanted devices, where the electrical terminals may come into contact with body fluids, it is necessary to choose terminals or pins made of bio-stable materials since there is the possibility of hydrogen embrittlement occurring, especially at the negative terminal in a lithium-ion battery.

One known glass used in the glass-to-metal seal in headers for ambient temperature lithium batteries is TA-23, which has a finite corrosion rate, when in contact with lithium metal, that limits the lifetime of the battery. The sealing temperature of TA-23 is about 1025°C, which is above the melting point of aluminum (which is about 550°C for typical aluminum alloys).

Glasses based on the CaO-Al₂O₃-B₂O₃ and CaO-MgO-Al₂O₃-B₂O₃ systems have been developed to improve the corrosion resistance and extend the battery lifetime in known designs. A promising glass is Cabal-12, which was developed by Sandia National Laboratories and which exhibits corrosion resistance. Although this glass has desirable corrosion resistance and resistance to cracking, many metals do not wet the glass so as to allow strong, hermetic seals, nor do they exhibit weldability or desired thermal expansion characteristics. Like TA-23, it is designed to have a CTE that closely matches that of the molybdenum center pin, about 6.0x10⁻⁶/°C. Cabal-12 has superior corrosion resistance than TA-23, but all of the CaO-Al₂O₃-B₂O₃ and CaO-MgO-Al₂O₃-B₂O₃ glasses have limited CTE ranges, on the order of 6.0-9.0x10⁻⁶/°C, which makes them unsuitable for sealing to high CTE metal pin materials. However, these glasses also seal at temperatures that are above the melting point of aluminum.

U.S. Patent No. 5,015,530 describes glass-to-metal seals for use in lithium electrolyte environments, using glass compositions that seal hermetically with higher expansion, metal pin materials other than molybdenum. Alkaline earth-aluminoborate glass formulations, based on the (CaO, SrO, BaO)-B₂O₃-Al₂O₃ systems and high thermal expansion metal pin materials are known. The glasses are boroaluminate glasses with SrO and BaO substituted for the CaO and MgO used in Cabal-12, and a CaO-B₂O₃-Al₂O₃ glass, having CTEs that match the pin materials, while resisting attack by lithium. The composition of these glasses is adjusted to achieve a CTE between 9.0 and 12.0x10⁻⁶/°C, allowing hermetic seals to high CTE pin materials, such as 446 stainless steel (CTE of 11.4x10⁻⁶/°C) and Alloy-52 (CTE of 9.8x10⁻⁶/°C).

U.S. Patent No. 5,821,011 addresses a similar problem for body implants of bio-stable materials. The glass insulator is a Cabal-12 type glass. The terminal is comprised of a material that has CTEs compatible with the glass seal. For glass seals having a CTE in the range of 6.8-8.0x10⁻⁶/°C, the terminal is a thin layer of titanium clad over niobium or tantalum. For glass seals having a thermal expansion in the range of 8.0-9.0x10⁻⁶/°C, the terminal is platinum, platinum-iridium, their alloys, or pure titanium.

U.S. Patent No. 5,851,222 discusses centerless grinding of pins for lithium batteries for implantable medical devices where the pin may be platinum wire, stainless steel, aluminum, tantalum, niobium, or titanium. TA-23 and Cabal-12 sealing glasses are discussed. These known glasses for creating seals in lithium-ion batteries all melt at temperatures that are above the melting point of aluminum alloys.

Hermetic battery seals can also be produced by using a modified alumino-borate composition similar to the family of Cabal-12, wherein the ratio of strontium oxide and/or barium oxide may be adjusted to maximize the coefficient of thermal expansion. Glasses described by Wilder (see, e.g., U.S. Patent No. 4,202,700) and Day, et al. (see, e.g., U.S. Patent No. 4,455,384) may alternatively be used to form a hermetic seal with aluminum, but their compatibility in the lithium-battery electrolyte is unknown.

A sealing glass that will seal with aluminum and that is compatible with the lithium battery environment is needed.

### SUMMARY OF THE INVENTION

The present invention is directed to the formation of glass-to-metal seals in a lithium-ion battery having a lightweight, reliable body, such as an aluminum body, for applications when hermeticity must be retained for long exposures to harsh environments.

Lithium-ion batteries, for example, contain a very corrosive electrolyte. A lithium-ion battery in a conventional application may not require true hermeticity because the battery will "wear out" before the seal does. However, the use of these batteries for rechargeable applications demands that the battery remain hermetically sealed and that the battery keep the electrolyte from escaping the battery package for longer terms. In other hermetic applications, such as seawater, saline, *in vivo* and/or implantable devices and the like, a long-lived reliable hermetic seal is essential.

Creating a glass seal of ALSG-32 glass, having a composition expressed in mole percent, of about 6.0% B₂O₃, 40.0% P₂O₅, 15.0% Na₂O, 18.0% K₂O, 9.0% PbO, and 12.0% Al₂O₃, with a metal pin of known composition and an aluminum body leads to a long-lived, reliable lithium-ion battery hermetic seal. Such a seal is essential to the application of lithium batteries to implantable devices in living tissue.

The novel features of the invention are set forth with particularity in the appended claims. The invention will be best understood from the following description when read in conjunction with the accompanying drawings.

### OBJECTS OF THE INVENTION

It is an object of the invention to bond a metal pin in an aluminum header with a glass-to-metal seal for use in corrosive environments.

It is an object of the invention to achieve a glass-to-metal seal with an aluminum header in a lithium-ion battery.

Other objects, advantages and novel features of the present invention will become apparent from the following detailed description of the invention when considered in conjunction with the accompanying drawing.

### BRIEF DESCRIPTION OF THE DRAWINGS

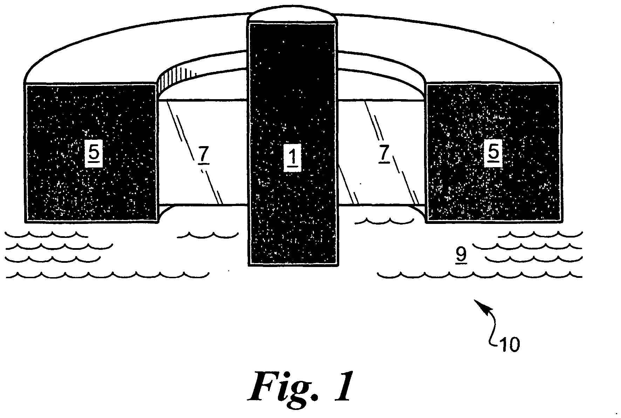

**FIG. 1** is cross-sectional view through a feedthrough in a lithium-ion battery.

### DETAILED DESCRIPTION OF THE PREFERRED EMBODIMENT

The following description is of the best mode presently contemplated for carrying out the invention. This description is not to be taken in a limiting sense, but is made merely for the purpose of describing the general principles of the invention.

The present invention is directed to improved techniques for generating a hermetic seal that is particularly rugged, such that hermeticity can be maintained for extended periods in harsh environments, such as lithium-ion batteries in implanted medical devices in living tissue.

Glass sealing material has been produced, having been designated as ALSG-32, (see, e.g., U.S. Patent No. 5,262,364 to Brow, et al.) that is suitable for sealing to aluminum. These glasses are further discussed in L. Kovacic, S.V. Crowder, R.K. Brow, and D.N. Bencoe, "Designing Aluminum Sealing Glasses for Manufacturability," Cer. Trans., 50 95-107. Lithium-ion battery seals containing high amounts of silica are more corrosion prone during exposure to the electrolyte than seals that do not contain silica. ALSG-32 contains no silica. However, ALSG-32 is a phosphate-based glass and there is no known prior art or teaching the use of phosphate glasses in batteries. This invention applies the ALSG-32 glasses as a sealing material in a lithium-ion battery, wherein at least one of the materials that forms the seal is a preferred material such as aluminum or an aluminum alloy.

A further embodiment of this invention is to modify the ALSG-32 with up to 50 mole percent MgO, which is known to be highly resistant to hydrofluoric acid in the battery electrolyte. This approach to eliminate or significantly reduce seal corrosion due to battery electrolyte is disclosed. Kilgo, et al. (see, e.g., U.S. Patent Nos. 5,965,469 and 6,037,539) describe modified versions of this glass that have a reduced dielectric constant. The glass compositions developed by Kilgo, et al. may also be used for batteries. The ALSG-32, and modified versions thereof, have been used as electrical feedthrough seals in connectors for electronic packaging. Additionally, they have been used as RF feedthroughs. However, the inventor is unaware of any prior discussion or use of these glasses as battery seals. In addition to these glasses, others glasses having variation of the ALSG-32 composition may also be used.

Exemplary materials of construction for batteries that may be used with the present invention are:
Header:
   Aluminum or aluminum alloys
   Titanium-aluminum alloys
   Stainless steel 300 series
   Copper or copper alloys
Glass:
   ALSG-32 or variants thereof
   Phosphate glasses in general, preferably lead-free glasses, as described by the Kilgo, et al. patents
Pin-conductor:
   Copper or copper alloys
   Nickel and nickel alloys
   Stainless steels, e.g. 300 series, 400 series
   Titanium, niobium, tantalum, molybdenum, and alloys thereof
   Platinum, iridium, rhodium, rhenium, and alloys thereof
   Aluminum or aluminum alloys

To evaluate the glass-electrolyte compatibility, a sample if ALSG-32 glass was placed in lithium battery electrolyte at room temperature in an unagitated container of typical lithium-ion solution for 40 days by the inventor. No weight loss, no visual change, or other indicia of corrosion were observed.

The preferred composition of ALSG-32 glass, in mole percent, is about 6.0% B₂O₃, 40.0% P₂O₅, 15.0% Na₂O, 18.0% K₂O, 9.0% PbO, and 12.0% Al₂O₃. This composition is reported by R.K. Brow, L. Kovacic, and R.E. Loehman, "Novel Glass Sealing Technologies," International Symposium on Manufacturing Practices and Technology, Fall Meeting of the American Ceramic Society, New Orleans, LA, Nov. 5-8, 1996.

**FIG. 1** provides a cross-sectional view of a preferred embodiment of the bonded assembly 10. The bonded assembly 10 is representative of a glass-to-metal seal for a lithium-ion battery, where the lithium electrolyte 9 is isolated from the ambient environment by hermetic seals between a sealing glass 7 and a pin 1, as well as between the sealing glass 7 and the header 5, where the header 5 is a preferably a metallic body component comprised of a chemically resistant metal. The header 5 is preferably comprised of aluminum, which is known to be compatible with lithium battery electrolyte. Pin 1 is retained in place by sealing glass 7, which electrically insulates the pin 1 from the header 5. The pin is preferably comprised of an electrical conductor, such as copper or copper alloys, nickel and nickel alloys, stainless steels, e.g., 300 series, 400 series, titanium, niobium, tantalum, molybdenum, and alloys thereof; platinum, iridium, rhodium, rhenium, and alloys thereof; or aluminum or aluminum alloys.

Obviously, many modifications and variations of the present invention are possible in light of the above teachings, within the scope of the appended claims.

## Claims

1. A lithium-ion battery containing a lithium-ion electrolyte and comprising:
a header comprised of aluminium;
a chemically resistant metallic electrically conductive pin; and
a glass material disposed between and electrically insulating said header from said pin, said glass material being chemically resistant to said lithium-ion electrolyte and comprised of a phosphate glass.

2. The battery according to claim 1, wherein said battery is suitable for implantation in living tissue.

3. The battery according to claim 1, wherein said glass material is comprised of about 6.0% B₂O₃, 40.0% P₂O₅, 15.0% Na₂O, 18.0% K₂O, 9.0% PbO, and 12.0% Al₂O₃, expressed in mole percent.

4. The battery according to claim 1, wherein said glass material is comprised of a modified ALSG-32 comprising MgO in a quantity up to 50 mole percent.

## Patentansprüche

1. Lithiumionenbatterie, die einen Lithiumionenelektrolyt enthält und Folgendes umfasst:
ein aus Aluminium bestehendes Gehäuse,
einen chemisch resistenten, elektrisch leitfähigen Metallpol und
ein zwischen Gehäuse und Pol vorgesehenes und diese beiden voneinander elektrisch isolierendes Glasmaterial, wobei das Glasmaterial gegenüber dem Lithiumionenelektrolyt chemisch resistent ist und aus einem Phosphatglas besteht.

2. Batterie nach Anspruch 1, worin die Batterie zur Implantation in Lebendgewebe geeignet ist.

3. Batterie nach Anspruch 1, worin das Glasmaterial aus etwa 6,0 % B₂O₃, 40,0 % P₂O₅, 15,0 % Na₂O, 18,0 % K₂O, 9,0 % PbO und 12,0 % Al₂O₃ (Angaben jeweils in Mol-%) besteht.

4. Batterie nach Anspruch 1, worin das Glasmaterial aus einem modifizierten ALSG-32 besteht, das MgO in einer Menge von bis zu 50 Mol-% umfasst.

## Revendications

1. Batterie au lithium-ion contenant un électrolyte au lithium-ion et comprenant :
une embase constituée d'aluminium ;
une broche métallique électriquement conductrice et chimiquement résistante ; et
un matériau en verre disposé entre et isolant électriquement ladite embase de ladite broche, ledit matériau en verre étant chimiquement résistant audit électrolyte au lithium-ion et étant constitué d'un verre au phosphate.

2. Batterie selon la revendication 1, laquelle batterie est adaptée pour être implantée dans un tissu vivant.

3. Batterie selon la revendication 1, dans laquelle ledit matériau en verre est constitué d'environ 6,0 % de B₂O₃, 40,0 % de P₂O₅, 15,0 % de Na₂0, 18,0 % de K₂O, 9,0 % de PbO et 12,0 % d'Al₂O₃, exprimés en pourcentages en moles.

4. Batterie selon la revendication 1, dans laquelle ledit matériau en verre est constitué d'un ALSG-32 modifié comprenant du MgO en une quantité allant jusqu'à 50 % en moles.
